# EUROPEAN PATENT APPLICATION

(11) **EP 4 578 742 A1**
(43) Date of publication of application: **02.07.2025**
(21) Application number: 23876599.4
(22) Date of filing: 08.10.2023
(51) Int. Cl.: B60R 13/04

(54) **CONNECTING PIECE, DECORATIVE STRIP ASSEMBLY, AND VEHICLE**

(30) Priority: 09.10.2022 CN 202211225732
(71) Applicant: Fuyao Glass Industry Group Co., Ltd., Fuqing, Fujian 350300 (CN)
(72) Inventor: LIU, Rongqiang, Fuzhou, Fujian 350300 (CN); YU, Yusheng, Fuzhou, Fujian 350300 (CN); SONG, Zhengcong, Fuzhou, Fujian 350300 (CN)
(74) Representative: Mewburn Ellis LLP
(86) International application number: PCT/CN2023/123296
(87) International publication number: WO 2024/078397

(57) **Abstract**

A connecting member, a trim strip assembly, and a vehicle are provided. The connecting member is operable to be disposed between and connect a first trim strip and a second trim strip. The first trim strip includes a first end face and a first receiving groove. The second trim strip includes a second end face and a second receiving groove. The second end face is in contact with the first end face. The second receiving groove is in communication with the first receiving groove. The connecting member is operable to be disposed within both the first receiving groove and the second receiving groove, so that one end of the connecting member is connected to the first trim strip, and another end of the connecting member is connected to the second trim strip. The connecting member is capable of preventing the first trim strip from moving relative to the second trim strip in a first direction, a second direction, and a third direction, and/or the connecting member is capable of preventing the second trim strip from moving relative to the first trim strip in the first direction, the second direction, and the third direction. The first direction, the second direction, and the third direction are mutually perpendicular, and the first direction is a direction in which the first end face abuts against the second end face. The technical solutions of the disclosure can reduce the assembly difficulty during connection of two trim strips, as well as minimize a gap and surface misalignment between the two trim strips.

## Description

### CROSS-REFERENCE TO RELATED APPLICATION(S)

This application claims priority to Chinese Patent Application No. 202211225732.1, filed with the Chinese Patent Office on October 9, 2022 and entitled "CONNECTING MEMBER, TRIM STRIP ASSEMBLY, AND VEHICLE", which is incorporated herein by reference in its entirety.

### TECHNICAL FIELD

The disclosure relates to the technical field of vehicle accessories, and in particular, to a connecting member.

The disclosure further relates to a trim strip assembly including the above-mentioned connecting member and a vehicle including the above-mentioned connecting member.

### BACKGROUND

Currently, a connection between two trim strips on a vehicle body is typically achieved through an insertion connection manner. Specifically, a connecting member is inserted into one of the two trim strips, and then the connecting member assembled with the one of the two trim strips is inserted into the other of the two trim strips to connect the two trim strips. However, this connection manner is prone to causing a relatively large gap and surface misalignment between the two trim strips after assembly.

### SUMMARY

Embodiments of the disclosure provide a connecting member and a vehicle, which can reduce the assembly difficulty during connection of two trim strips, as well as minimize a gap and surface misalignment between the two trim strips.

In a first aspect, a connecting member is provided in the disclosure. The connecting member is operable to be disposed between and connect a first trim strip and a second trim strip. The first trim strip includes a first end face and a first receiving groove. The second trim strip includes a second end face and a second receiving groove. The second end face is in contact with the first end face. The second receiving groove is in communication with the first receiving groove. The connecting member is operable to be disposed within both the first receiving groove and the second receiving groove, so that one end of the connecting member is connected to the first trim strip, and another end of the connecting member is connected to the second trim strip. The connecting member is capable of preventing the first trim strip from moving relative to the second trim strip in a first direction, a second direction, and a third direction, and/or the connecting member is capable of preventing the second trim strip from moving relative to the first trim strip in the first direction, the second direction, and the third direction. The first direction, the second direction, and the third direction are mutually perpendicular, and the first direction is a direction in which the first end face abuts against the second end face.

It may be understood that, a conventional connection between two trim strips is typically achieved through an insertion connection manner. Specifically, a connecting member is inserted into one of the two trim strips, and then the connecting member assembled with the attached trim strip is inserted into the other of the two trim strips to connect the two trim strips. However, this connection manner is prone to causing a relatively large gap and surface misalignment between the two trim strips after assembly.

Therefore, in technical solutions of the disclosure, the connecting member is provided and positioned within both the first receiving groove of the first trim strip and the second receiving groove of the second trim strip. By securing both ends of the connecting member to the first trim strip and the second trim strip, respectively, the first trim strip and the second trim strip can cooperate with each other to receive the connecting member, and the connecting member can allow the first end face of the first trim strip and the second end face of the second trim strip to abut against each other.

Further, since the connecting member can prevent the two trim strips from moving relative to each other in first direction *X,* second direction *Y,* and third direction *Z,* after the two trim strips are connected with each other, the connecting member can prevent the two trim strips from moving relative to each other in a vertical direction (i.e., third direction *Z*), a lateral direction (i.e., first direction *X*), and a longitudinal direction (i.e., second direction *Y*). This ensures that after the first end face of the first trim strip and the second end face of the second trim strip come into contact with each other, the first end face and the second end face can remain in position without any displacement, tilt, or misalignment relative to each other due to the position-fixing function of the connecting member. This helps to achieve better abutment and alignment between the first end face of the first trim strip and the second end face of the second trim strip, reducing the gap and surface misalignment at the position where the first trim strip and the second trim strip are connected to each other, and providing a better aesthetic appearance.

In a possible embodiment, the first trim strip further includes a first side face connected to the first end face, where the first side face defines a first stop groove in communication with the first receiving groove. The connecting member includes a body and a first limiting structure. The body includes a first end and a second end. The first end is operable to be disposed within the first receiving groove, the second end is operable to be disposed within the second receiving groove. The first end includes a first peripheral side face, the first limiting structure protrudes from the first peripheral side face, and at least part of the first limiting structure is operable to be disposed within the first stop groove and abut against a groove wall of the first stop groove to prevent the first trim strip from moving relative to the second trim strip in the first direction.

In a possible embodiment, the first limiting structure includes a guide face and a contact face connected to the guide face, an included angle is defined between the guide face and the contact face, at least part of the guide face is operable to be disposed within the first receiving groove, and the contact face is operable to abut against the groove wall of the first stop groove.

In a possible embodiment, the first limiting structure includes a main body and a buffering structure. The main body is connected to the first peripheral side face and is operable to be disposed within both the first receiving groove and the first stop groove, the buffering structure is connected to the main body and is operable to abut against the groove wall of the first stop groove, and the first limiting structure has a hollow region disposed between the buffering structure and the main body.

In a possible embodiment, the first limiting structure includes a main body and a buffering structure, the main body is connected to the first peripheral side face and is operable to be disposed within both the first receiving groove and the first stop groove, the buffering structure is connected to the main body and is operable to abut against the groove wall of the first stop groove, and the buffering structure is in a sawtooth shape.

In a possible embodiment, a clamping member is disposed on a groove wall of the first receiving groove, the connecting member further includes a second limiting structure, the second limiting structure is disposed on the first peripheral side face and spaced apart from the first limiting structure, and the second limiting structure is operable to be clamped with the clamping member to prevent the first trim strip from moving relative to the second trim strip in the second direction.

In a possible embodiment, the connecting member further includes a first upper face and a third limiting structure. The first upper face is connected to both the first peripheral side face and the first end face and is operable to face the first trim strip, and the third limiting structure is disposed on the first upper face and is operable to abut against a groove wall of the first receiving groove to prevent the first trim strip from moving relative to the second trim strip in the third direction.

In a possible embodiment, a face, that is operable to abut against the groove wall of the first receiving groove, of the third limiting structure is a planar or curved surface.

In a possible embodiment, the connecting member further includes a first lower face and at least one contact protrusion. The first lower face is opposite to the first upper face, the at least one contact protrusion is connected to the first lower face, and the at least one contact protrusion is operable to contact a vehicle body.

In a possible embodiment, the second end includes a second upper surface, and the second upper surface is operable to be bonded to a groove wall of the second receiving groove.

In a second aspect, a trim strip assembly is further provided in the disclosure. The trim strip assembly includes a first trim strip, a second trim strip, and the above-mentioned connecting member. The connecting member is connected to the first trim strip and the second trim strip.

In a third aspect, a vehicle is further provided in the disclosure. The vehicle includes a first trim strip, a second trim strip, and the above-mentioned connecting member. The connecting member is connected to the first trim strip and the second trim strip.

### BRIEF DESCRIPTION OF THE DRAWINGS

To describe solutions of the disclosure more clearly, the following briefly introduces the accompanying drawings required for describing the embodiments. Apparently, the accompanying drawings in the following description show merely some embodiments of the disclosure, and those of ordinary skill in the art may still derive other accompanying drawings from these accompanying drawings without creative efforts.
FIG. 1 is a schematic structural view of a vehicle according to an embodiment of the disclosure.
FIG. 2 is a schematic view illustrating part of a trim strip assembly according to an embodiment of the disclosure.
FIG. 3 is a bottom view of the trim strip assembly in FIG. 2.
FIG. 4 is a schematic view illustrating part of a first trim strip in FIG. 2.
FIG. 5 is a schematic view illustrating part of a second trim strip in FIG. 2.
FIG. 6 is a schematic view of a connecting member of the trim strip assembly in FIG. 3, viewed from a direction.
FIG. 7 is a schematic view illustrating an assembly of a connecting member of the trim strip assembly in FIG. 3 with a second trim strip in FIG. 3.
FIG. 8 illustrates a simplified schematic view of a first limiting structure of a connecting member in FIG. 3.
FIG. 9 illustrates another simplified schematic view of a first limiting structure of a connecting member in FIG. 3.
FIG. 10 illustrates yet another simplified schematic view of a first limiting structure of a connecting member in FIG. 3.
FIG. 11 illustrates a simplified schematic cross-sectional view of a second limiting structure of a connecting member, taken along line A-A in FIG. 3.
FIG. 12 illustrates a simplified schematic cross-sectional view of a third limiting structure of a connecting member, taken along line B-B in FIG. 3.
FIG. 13 illustrates another simplified schematic cross-sectional view of a third limiting structure of a connecting member, taken along line B-B in FIG. 3.
FIG. 14 illustrates a schematic view of a contact protrusion of a connecting member in FIG. 3, viewed from a direction.
FIG. 15 is a schematic view illustrating an assembly of a contact protrusion of the connecting member in FIG. 14 with a vehicle body.
FIG. 16 is a schematic view illustrating the connecting member in FIG. 14 without a contact protrusion.
FIG. 17 is a schematic view of another connecting member of the trim strip assembly in FIG. 3, viewed from a direction.

### DETAILED DESCRIPTION

For the ease of understanding, the terms related to embodiments of the disclosure are explained first.

The term "and/or" only describes an association relationship between associated objects, which indicates that there can be three relationships, for example, A and/or B can indicate A alone, both A and B, or B alone.

Terms "a plurality of" and "multiple" mean that the number is two or more.

Terms "connect" may be understood in a broad sense. For example, A and B are connected, which can be directly connected or indirectly connected through an intermediate medium.

Hereinafter, specific embodiments of the disclosure will be clearly described in conjunction with the accompanying drawings.

The disclosure provides a connecting member, a trim strip assembly, and a vehicle, which can reduce the assembly difficulty during connection of two trim strips and minimize the gap and surface misalignment between the two trim strips.

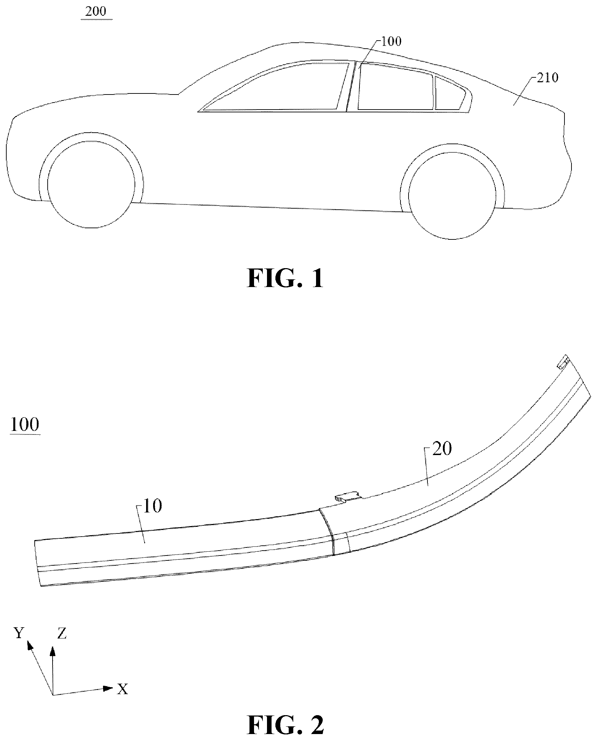

Referring to FIG. 1, FIG. 1 is a schematic structural view of a vehicle 200 according to an embodiment of the disclosure. The vehicle 200 may include a vehicle body 210 and a trim strip assembly 100 connected to the vehicle body 210. The trim strip assembly 100 may be a window trim, which may be positioned around a window to serve decorative and wind-blocking purposes, among other functions.

It may be noted that FIG. 1 aims to schematically illustrate a connection between the vehicle body 210 and the trim strip assembly 100, and is not intended to specifically limit connection positions, specific structures, or number of various components. The structures illustrated in the embodiments of the disclosure do not constitute a specific limitation on the vehicle 200. In other embodiments of the disclosure, the vehicle 200 may include more or fewer components than those illustrated, or may combine certain components, split components, or have a different arrangement of components. The illustrated components may be implemented using hardware, software, or a combination of hardware and software.

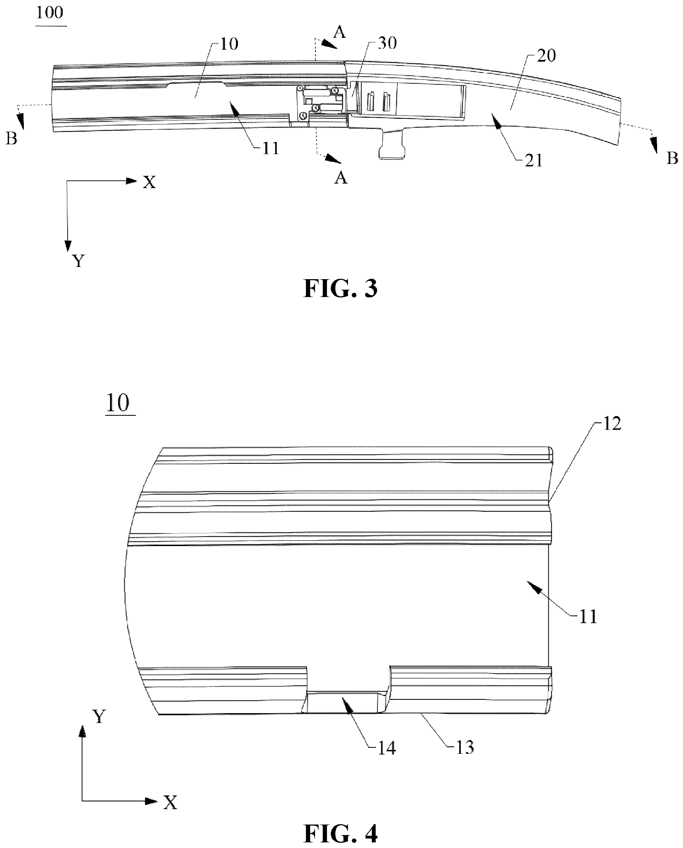

Referring to FIG. 2 and FIG. 3, FIG. 2 is a schematic view illustrating part of the trim strip assembly 100 according to an embodiment of the disclosure, and FIG. 3 is a bottom view of the trim strip assembly 100 in FIG. 2. The trim strip assembly 100 may include a first trim strip 10, a second trim strip 20, and a connecting member 30, where the first trim strip 10 and the second trim strip 20 abut against each other via the connecting member 30. A direction in which the first trim strip 10 and the second trim strip 20 abut against each other is first direction *X.* A width direction of the first trim strip 10 and the second trim strip 20 is second direction *Y*. A thickness direction of the first trim strip 10 and the second trim strip 20 is a third direction *Z.* First direction *X,* second direction *Y,* and third direction *Z* are mutually perpendicular.

It may be noted that FIG. 2 only illustrates part of the trim strip assembly 100 at a position where the two trim strips are connected to each other. Any structural improvements to the trim strip assembly 100 can be applied to any location on the vehicle 200 where a window trim is installed and an abutment between two trim strips is required, as long as there is no conflict.

Referring to FIG. 3 and FIG. 4, FIG. 4 is a schematic view illustrating part of the first trim strip 10 in FIG. 2. The first trim strip 10 defines a first receiving groove 11, which is capable of receiving components such as part of the connecting member 30 and part of the vehicle body 210. The first trim strip 10 includes a first end face 12 and a first side face 13. The first end face 12 is an end face of the first trim strip 10 that abuts against the second trim strip 20. The first side face 13 is connected to the first end face 12. The first side face 13 defines a first stop groove 14, which communicates with the first receiving groove 11. In other words, the first stop groove 14 is a through-slot that may extend through a side of the first trim strip 10 to be in communication with the first receiving groove 11 inside the first trim strip 10.

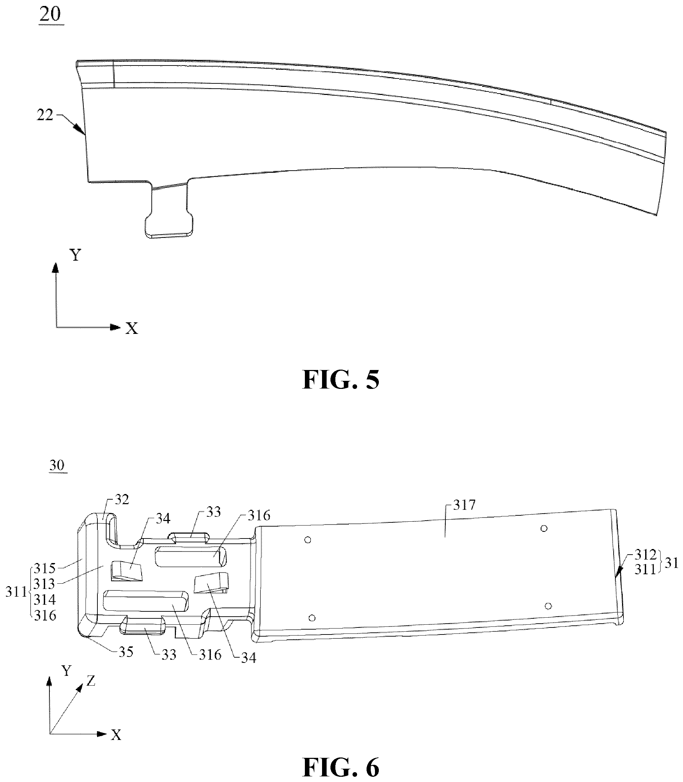

Referring to FIG. 3 and FIG. 5, FIG. 5 is a schematic view illustrating part of the second trim strip 20 in FIG. 2. The second trim strip 20 defines a second receiving groove 21, which is capable of receiving components such as part of the connecting member 30 and part of the vehicle body 210. The second trim strip 20 includes a second end face 22. The second end face 22 is an end face of the second trim strip 20 that abuts against the first trim strip 10. Specifically, the second end face 22 contacts the first end face 12, and the second receiving groove 21 communicates with the first receiving groove 11, allowing the second trim strip 20 and the first trim strip 10 to be connected end-to-end and communicate with each other.

The connecting member 30 is disposed within both the first receiving groove 11 and the second receiving groove 21, so that one end of the connecting member 30 is connected to the first trim strip 10, and another end of the connecting member 30 is connected to the second trim strip 20. The connecting member 30 is capable of preventing the first trim strip 10 from moving relative to the second trim strip 20 in first direction *X,* second direction *Y,* and third direction *Z,* and/or the connecting member 20 is capable of preventing the second trim strip 20 from moving relative to the first trim strip 10 in first direction *X,* second direction *Y,* and third direction *Z.*

It may be understood that, a conventional connection between two trim strips is typically achieved through an insertion connection manner. Specifically, a connecting member is inserted into one of the two trim strips, and then the connecting member assembled with the attached trim strip is inserted into the other of the two trim strips to connect the two trim strips. However, this connection manner is prone to causing a relatively large gap and surface misalignment between the two trim strips after assembly.

Therefore, in technical solutions of the disclosure, the connecting member 30 is provided and positioned within both the first receiving groove 11 of the first trim strip 10 and the second receiving groove 21 of the second trim strip 20. By securing both ends of the connecting member 30 to the first trim strip 10 and the second trim strip 20, respectively, the first trim strip 10 and the second trim strip 20 can cooperate with each other to receive the connecting member 30, and the connecting member 30 can allow the first end face 12 of the first trim strip 10 and the second end face 22 of the second trim strip 20 to abut against each other.

Further, since the connecting member 30 can prevent the two trim strips from moving relative to each other in first direction *X,* second direction *Y,* and third direction *Z,* after the two trim strips are connected with each other, the connecting member 30 can prevent the two trim strips from moving relative to each other in a vertical direction (i.e., third direction *Z*), a lateral direction (i.e., first direction *X*), and a longitudinal direction (i.e., second direction *Y*). This ensures that after the first end face 12 of the first trim strip 10 and the second end face 22 of the second trim strip 20 come into contact, the first end face 12 and the second end face 22 can remain in position without any displacement, tilt, or misalignment relative to each other due to the position-fixing function of the connecting member 30. This helps to achieve better abutment and alignment between the first end face 12 of the first trim strip 10 and the second end face 22 of the second trim strip 20, reducing the gap and surface misalignment at a position where the first trim strip 10 and the second trim strip 20 are connected to each other, and providing a better aesthetic appearance.

It may be noted that the connecting member 30 is not limited to being applied between the first trim strip 10 and the second trim strip 20. The connecting member 30 can also be applied between any two components that require abutment and alignment between their end faces, which is not strictly limited in the embodiments of disclosure.

The principle by which the connecting member 30 can prevent the first trim strip 10 and the second trim strip 20 from moving relative to each other will be described in detail hereinafter with reference to the specific structure of the connecting member 30.

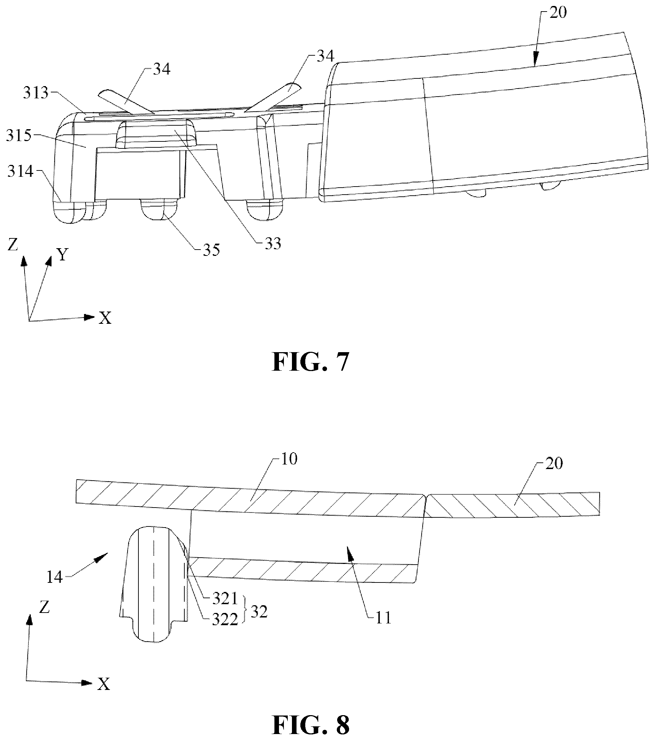

Referring to FIG. 6 and FIG. 7, FIG. 6 is a schematic view of the connecting member 30 of the trim strip assembly 100 in FIG. 3, viewed from a direction, and FIG. 7 is a schematic view illustrating an assembly of the connecting member 30 of the trim strip assembly in FIG. 3 with the second trim strip 20 in FIG. 3. The connecting member 30 may include a body 31, a first limiting structure 32, a second limiting structure 33, and a third limiting structure 34.

The body 31 may include a first end 311 and a second end 312. The first end 311 is an end of the body 31 that is connected to the first trim strip 10 and is disposed within the first receiving groove 11. The first end 311 may include a first upper face 313, a first lower face 314, and a first peripheral side face 315 that is disposed between and connected to the first upper face 313 and the first lower face 314. The first upper face 313 is opposite to the first lower face 314. The first upper face 313 faces the first trim strip 10. The first lower face 314 faces the vehicle body 210. The second end 312 is an end of the body 31 that is connected to the second trim strip 20 and is disposed within the second receiving groove 21.

The first limiting structure 32 protrudes from the first peripheral side face 315. At least part of the first limiting structure 32 is disposed within the first stop groove 14 of the first trim strip 10 and abuts against a groove wall of the first stop groove 14. With this arrangement, the connecting member 30 can be clamped with and fixed to the first trim strip 10 through engagement between the first limiting structure 32 and the first stop groove 14. This clamping engagement between the first limiting structure 32 and the first stop groove 14 can prevent the first trim strip 10 from moving relative to the second trim strip 20 in first direction *X,* preventing the first trim strip 10 and the second trim strip 20 from laterally wobbling relative to each other. This helps to reduce the gap and surface misalignment at the position where the first trim strip 10 and the second trim strip 20 are connected to each other.

In a possible embodiment, as illustrated in FIG. 8, FIG. 8 illustrates a simplified schematic view of the first limiting structure 32 of the connecting member 30 in FIG. 3. The first limiting structure 32 may include a guide face 321 and a contact face 322 connected to the guide face 321. An included angle is defined between the guide face 321 and the contact face 322. At least part of the guide face 321 is disposed within the first receiving groove 11, and the contact face 322 abuts against the groove wall of the first stop groove 14. Specifically, the guide face 321 is an inclined surface. During insertion of the first limiting structure 32 into the first stop groove 14 and the first receiving groove 11, the guide face 321 can provide guidance for the first limiting structure 32 to guide the first limiting structure 32 to quickly slide into the first stop groove 14 and the first receiving groove 11, ensuring good reliability. Once the first limiting structure 32 slides into position, the contact face 322 abuts against the groove wall of the first stop groove 14, thereby causing the first limiting structure 32 to abut against the first stop groove 14 and effectively preventing the first trim strip 10 from moving relative to the second trim strip 20 in first direction *X.*

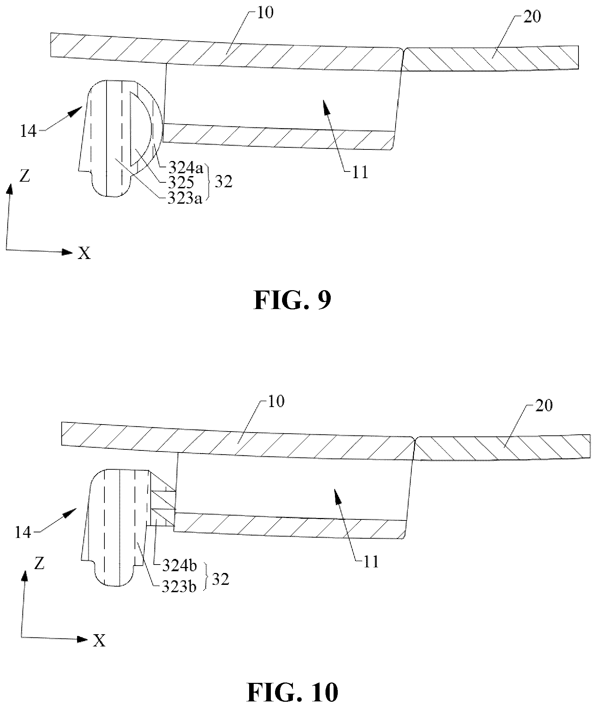

In a possible embodiment, as illustrated in FIG. 9, FIG. 9 illustrates another simplified schematic view of the first limiting structure 32 of the connecting member 30 in FIG. 3. The first limiting structure 32 may include a main body 323a and a buffering structure 324a. The main body 323a is connected to the first peripheral side face 315 of the body 31. The main body 323a is disposed within both the first receiving groove 11 and the first stop groove 14. The buffering structure 324a is connected to the main body 323a and abuts against the groove wall of the first stop groove 14. The first limiting structure 32 has a hollow region 325 disposed between the buffering structure 324a and the main body 323a. With this arrangement, by defining the hollow region 325 between the buffering structure 324a and the main body 323a, during insertion of the first limiting structure 32 into the first stop groove 14 and the first receiving groove 11, the buffering structure 324a abuts against the groove wall of the first stop groove 14 and tends to move towards the main body 323a. This allows the hollow region 325 to absorb any tolerance between the first trim strip 10 and the second trim strip 20 in first direction X, ensuring good reliability.

In yet another possible embodiment, referring to FIG. 10, FIG. 10 illustrates yet another simplified schematic view of the first limiting structure 32 of the connecting member 30 in FIG. 3. The first limiting structure 32 may include a main body 323b and a buffering structure 324b. The main body 323b is connected to the first peripheral side face 315 of the body 31. The main body 323b is disposed within both the first receiving groove 11 and the first stop groove 14. The buffering structure 324b is connected to the main body 323b and abuts against the groove wall of the first stop groove 14. The buffering structure 324b is in a sawtooth shape. With this arrangement, by making the buffering structure 324b to be in a sawtooth shape, during insertion of the first limiting structure 32 into the first stop groove 14 and the first receiving groove 11, the buffering structure 324b can abut against the groove wall of the first stop groove 14 and tend to be compressed. This allows the buffering structure 324b to absorb any tolerance between the first trim strip 10 and the second trim strip 20 in first direction X, ensuring good reliability.

Referring to FIGS. 3, 6, and 11, FIG. 11 illustrates a simplified schematic cross-sectional view of the second limiting structure 33 of the connecting member 30, taken along line A-A in FIG. 3. In the embodiments of the disclosure, a clamping member 15 is disposed on a groove wall of the first receiving groove 11. The clamping member 15 defines a receiving space 16 that can accommodate part of the connecting member 30. For example, the clamping member 15 can be a champing jaw. Specifically, the second limiting structure 33 is disposed on the first peripheral side face 315 and is spaced apart from the first limiting structure 32. The clamping member 15 is disposed around a periphery of the body 31 and is clamped with the second limiting structure 33. With this arrangement, the connecting member 30 can be clamped with and fixed to the first trim strip 10 through engagement between the second limiting structure 33 and the clamping member 15, and the clamping engagement between the second limiting structure 33 and the clamping member 15 can prevent the first trim strip 10 from moving relative to the second trim strip 20 in second direction *Y*, preventing the first trim strip 10 and the second trim strip 20 from longitudinally wobbling relative to each other. This helps to reduce the gap and surface misalignment at the position where the first trim strip 10 and the second trim strip 20 is connected to each other.

In a possible embodiment, as illustrated in FIG. 6, the body 31 further defines a through hole 316, which is disposed near the second limiting structure 33. The through hole 316 provides a certain amount of space for a deformation of the second limiting structure 33.

For example, as illustrated in FIG. 6, there are two second limiting structures 33, which are arranged on two opposite sides of the first peripheral side face 315, respectively. That is, the two second limiting structures 33 are spaced apart from each other in second direction *Y*. Additionally, an orthographic projection of one of the two second limiting structures 33 on the body 31 may fall within an orthographic projection of the other of the two second limiting structures 33 on the body 31. Alternatively, an orthographic projection of one of the two second limiting structures 33 on the body 31 may be offset from an orthographic projection of the other of the two second limiting structures 33, that is, the two second limiting structures 33 are offset relative to each other in first direction *X.* There are also two through holes 316 spaced apart from each other. Each of the two through holes 316 is defined near one of the second limiting structures 33.

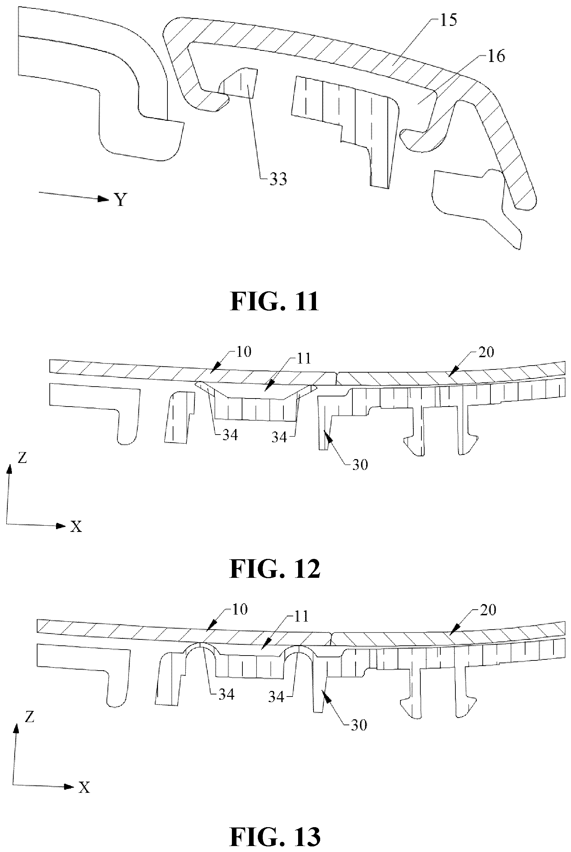

Referring to FIG. 6 and FIG. 12, FIG. 12 illustrates a simplified schematic cross-sectional view of the third limiting structure 34 of the connecting member 30, taken along line B-B in FIG. 3. The third limiting structure 34 is disposed on the first upper face 313 and abuts against the groove wall of the first receiving groove 11. With this arrangement, by making the third limiting structure 34 abut against the groove wall of the first receiving groove 11, the connecting member 30 can prevent the first trim strip 10 from moving relative to the second trim strip 20 in third direction *Z,* preventing the first trim strip 10 and the second trim strip 20 from vertically wobbling relative to each other. This helps to reduce the gap and surface misalignment at the position where the first trim strip 10 and the second trim strip 20 is connected to each other.

For example, as illustrated in FIG. 6, there are two third limiting structures 34, which are arranged on two opposite sides of the first upper face 313, respectively. That is, the two second limiting structures 33 are spaced apart from each other in first direction *X.*

In a possible embodiment, a face, that abuts against the groove wall of the first receiving groove 11, of the third limiting structure 34 is a planar surface.

In another possible embodiment, referring to FIG. 12 and FIG. 13, FIG. 13 illustrates another simplified schematic cross-sectional view of the third limiting structure 34 of the connecting member 30, taken along line B-B in FIG. 3. The face, that abuts against the groove wall of the first receiving groove 11, of the third limiting structure 34 is a curved surface. For example, the shape of the curve curved surface may be a Bezier curve, spline curve, or arc.

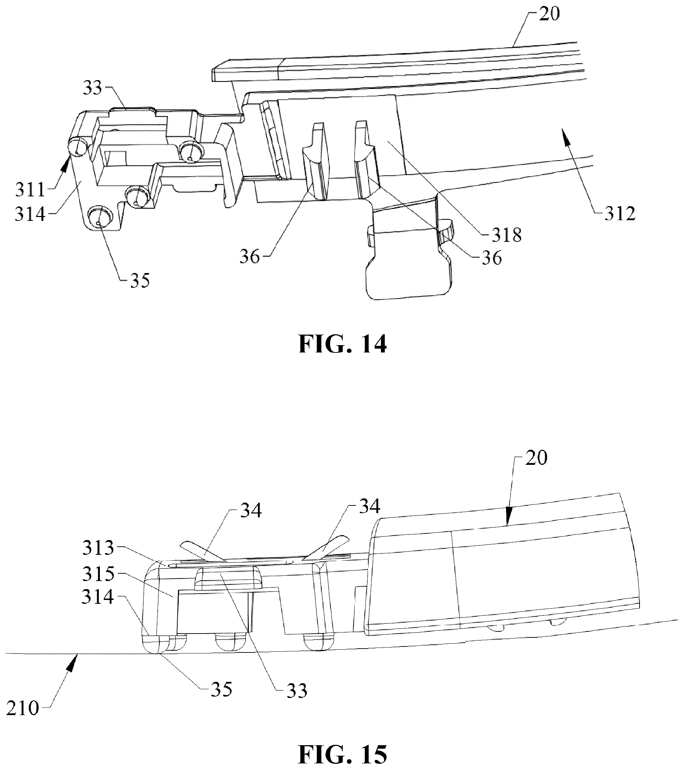

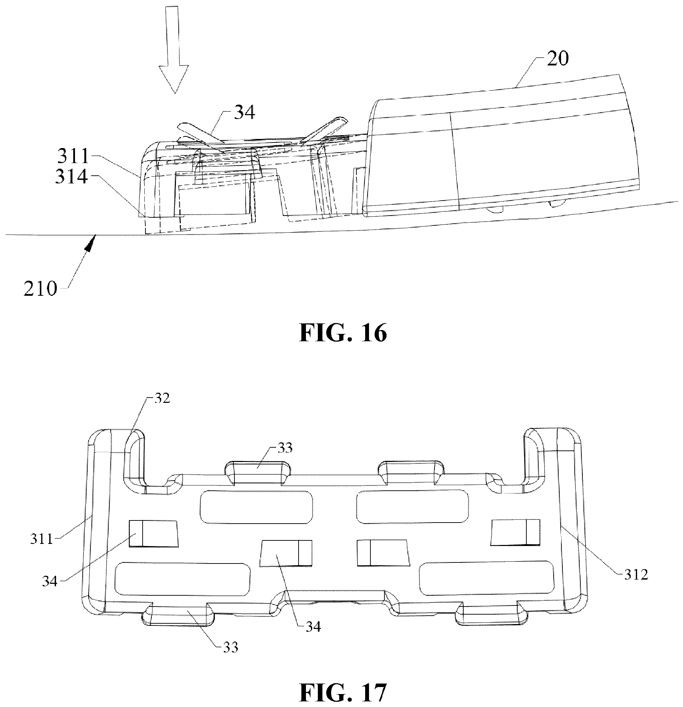

Referring to FIGS. 14, 15, and 16, FIG. 14 illustrates a schematic view of a contact protrusion 35 of the connecting member 30 in FIG. 3, viewed from a direction, FIG. 15 is a schematic view illustrating an assembly of the contact protrusion 35 of the connecting member 30 in FIG. 14 with the vehicle body 210, and FIG. 16 is a schematic view illustrating the connecting member 30 in FIG. 14 without the contact protrusion 35.

In the embodiments of the disclosure, the connecting member 30 may also include at least one contact protrusion 35. The at least one contact protrusion 35 is connected to the first lower face 314 of the first end 311 and is used to contact the vehicle body 210. It may be understood that the connecting member 30 is snap-fitted onto the first trim strip 10 and the second trim strip 20 in third direction *Z,* i.e., the connecting member 30 is snap-fitted onto the first trim strip 10 and the second trim strip 20 in a direction from top to bottom. Thus, by providing the contact protrusion 35 on the first lower face 314 of the first end 311, during snap-fitting of the first trim strip 10 onto the connecting member 30 in the direction from top to bottom, the clamping member 15 may be compressed to resiliently deform. This causes the entire connecting member 30 to be subjected to pressure, tending to move towards the vehicle body 210, allowing the contact protrusion 35 to abut against the vehicle body 210. Once the contact protrusion 35 abuts against the vehicle body 210, a reaction force is generated to cause the second limiting structure 33 to be clamped by the clamping member 15.

During snap-fitting of the first trim strip 10 onto the connecting member 30, the third limiting structure 34 will also be subjected to pressure from the first trim strip 10 and will tightly contact the groove wall of the first receiving groove 11. During this process, the third limiting structure 34 may deform resiliently, thereby absorbing the assembly tolerance between the first trim strip 10 and the connecting member 30, ensuring that the second limiting structure 33 can be more easily clamped into the clamping member 15.

Additionally, since the contact protrusion 35 is configured as a protruding form, it reduces the direct contact area between the connecting member 30 and sheet metal of the vehicle body 210, thereby reducing the precision requirements during manufacturing of the connecting member 30 (such as the precision needed to mate with sheet metal of the vehicle body 210). This helps to absorb manufacturing and assembly tolerances, further ensuring that the second limiting structure 33 can being more easily clamped into the clamping member 15.

During this process, if the contact protrusion 35 is not provided, as illustrated in FIG. 16, the first lower face 314 of the first end 311 would directly contact the vehicle body 210, causing deformation of the connecting member 30, which in turn prevents the second limiting structure 33 from being clamped into the clamping member 15. Furthermore, the tolerance of the sheet metal of the vehicle body 210 can cause the entire connecting member 30 to deform along with the sheet metal, resulting in an increased tolerance. This may lead to unwanted noise and lower reliability.

In a possible embodiment, as illustrated in FIG. 6, the second end 312 may include a second upper surface 317, which is bonded to a groove wall of the second receiving groove 21, thereby fixing the second end 312 to the second trim strip 20, and in turn, fixing the connecting member 30 to the second trim strip 20. In this embodiment, as illustrated in FIG. 14, the second end 312 may also include a second bottom face 318, and the connecting member 30 may include a supporting member 36. The supporting member 36 is disposed on the second bottom face 318 and is used to contact the vehicle body 210.

In another possible embodiment, referring to FIG. 17, FIG. 17 is a schematic view of another connecting member 30 of the trim strip assembly 100 in FIG. 3, viewed from a direction. In this embodiment, the second end 312 of the body 31 is symmetrically with the first end 311 of the body 31. The second end 312 of the body 31 may have a structure identical to the one disposed on the first end 311 of the body 31, with a symmetrically opposite position. In other words, the two ends of the connecting member 30 are arranged symmetrically.

It may be noted that the shape and position of the structures (such as the first limiting structure 32, the second limiting structure 33, the third limiting structure 34, and contact protrusion 35) provided on the second end 312 of the body 31 can follow the same description as for the first end 311 of the body 31, as long as the structures are arranged symmetrically. This will not be further elaborated herein. With this arrangement, the connecting member 30 can effectively prevent the second trim strip 20 from moving relative to the first trim strip 10 in first direction *X,* second direction *Y,* and third direction *Z.*

The embodiments of the disclosure are described in detail above, specific examples are used herein to describe the principle and implementation manners of the disclosure. The description of the above embodiments is merely used to help understand the method and the core idea of the disclosure. Meanwhile, those skilled in the art may make modifications to the specific implementation manners and the application scope according to the idea of the disclosure. In summary, the contents of the specification should not be construed as limiting the disclosure.

## Claims

1. A connecting member, operable to be disposed between and connect a first trim strip and a second trim strip, wherein the first trim strip comprises a first end face and a first receiving groove, the second trim strip comprises a second end face and a second receiving groove, the second end face is in contact with the first end face, and the second receiving groove is in communication with the first receiving groove, wherein
the connecting member is operable to be disposed within both the first receiving groove and the second receiving groove, so that one end of the connecting member is connected to the first trim strip, and another end of the connecting member is connected to the second trim strip; the connecting member is capable of preventing the first trim strip from moving relative to the second trim strip in a first direction, a second direction, and a third direction, and/or the connecting member is capable of preventing the second trim strip from moving relative to the first trim strip in the first direction, the second direction, and the third direction, wherein the first direction, the second direction, and the third direction are mutually perpendicular, and the first direction is a direction in which the first end face abuts against the second end face.

2. The connecting member according to claim 1, wherein the first trim strip further comprises a first side face connected to the first end face, wherein the first side face defines a first stop groove in communication with the first receiving groove; and
the connecting member comprises a body and a first limiting structure, wherein the body comprises a first end and a second end, wherein the first end is operable to be disposed within the first receiving groove, the second end is operable to be disposed within the second receiving groove, wherein the first end comprises a first peripheral side face, the first limiting structure protrudes from the first peripheral side face, and at least part of the first limiting structure is operable to be disposed within the first stop groove and abut against a groove wall of the first stop groove to prevent the first trim strip from moving relative to the second trim strip in the first direction.

3. The connecting member according to claim 2, wherein the first limiting structure comprises a guide face and a contact face connected to the guide face, an included angle is defined between the guide face and the contact face, at least part of the guide face is operable to be disposed within the first receiving groove, and the contact face is operable to abut against the groove wall of the first stop groove.

4. The connecting member according to claim 2, wherein the first limiting structure comprises a main body and a buffering structure, wherein the main body is connected to the first peripheral side face and is operable to be disposed within both the first receiving groove and the first stop groove, the buffering structure is connected to the main body and is operable to abut against the groove wall of the first stop groove, and the first limiting structure has a hollow region disposed between the buffering structure and the main body.

5. The connecting member according to claim 2, wherein the first limiting structure comprises a main body and a buffering structure, the main body is connected to the first peripheral side face and is operable to be disposed within both the first receiving groove and the first stop groove, the buffering structure is connected to the main body and is operable to abut against the groove wall of the first stop groove, and the buffering structure is in a sawtooth shape.

6. The connecting member according to any one of claims 2 to 5, wherein a clamping member is disposed on a groove wall of the first receiving groove, the connecting member further comprises a second limiting structure, the second limiting structure is disposed on the first peripheral side face and spaced apart from the first limiting structure, and the second limiting structure is operable to be clamped with the clamping member to prevent the first trim strip from moving relative to the second trim strip in the second direction.

7. The connecting member according to any one of claims 2 to 5, further comprising a first upper face and a third limiting structure, wherein the first upper face is connected to both the first peripheral side face and the first end face and is operable to face the first trim strip, and the third limiting structure is disposed on the first upper face and is operable to abut against a groove wall of the first receiving groove to prevent the first trim strip from moving relative to the second trim strip in the third direction.

8. The connecting member according to claim 7, wherein a face, that is operable to abut against the groove wall of the first receiving groove, of the third limiting structure is a planar or curved surface.

9. The connecting member according to claim 7, further comprising a first lower face and at least one contact protrusion, wherein the first lower face is opposite to the first upper face, the at least one contact protrusion is connected to the first lower face, and the at least one contact protrusion is operable to contact a vehicle body.

10. The connecting member according to any one of claims 2 to 5, wherein the second end comprises a second upper surface, wherein the second upper surface is operable to be bonded to a groove wall of the second receiving groove.

11. A trim strip assembly, comprising a first trim strip, a second trim strip, and the connecting member according to any one of claims 1 to 10, wherein the connecting member is connected to the first trim strip and the second trim strip.

12. A vehicle, comprising a first trim strip, a second trim strip, and the connecting member according to any one of claims 1 to 10, wherein the connecting member is connected to the first trim strip and the second trim strip.
